# EUROPÄISCHE PATENTSCHRIFT

(11) **EP 1 430 368 B1**
(45) Veröffentlichungstag und Bekanntmachung des Hinweises auf die Patenterteilung: **10.12.2008**
(21) Anmeldenummer: 02776686.4
(22) Anmeldetag: 17.09.2002
(51) Int. Cl.: G05B 19/00

(54) **VERFAHREN ZUM ZUGRIFF AUF INFORMATIONEN UND/ODER DIENSTE EINES VERTEILTEN AUTOMATISIERUNGSSYSTEMS**
METHOD FOR ACCESSING INFORMATION AND/OR SERVICES OF A DISTRIBUTED AUTOMATION SYSTEM
PROCEDE POUR ACCEDER A DES INFORMATIONS ET/OU A DES SERVICES D'UN SYSTEME D'AUTOMATISATION DISTRIBUE

(30) Priorität: 27.09.2001 EP 01123168; 06.12.2001 DE 10159931
(43) Veröffentlichungstag der Anmeldung: 23.06.2004
(73) Patentinhaber: SIEMENS AKTIENGESELLSCHAFT, 80506 München (DE)
(72) Erfinder: DINGES, Clemens, 90587 Obermichelbach (DE); SCHLERETH, Michael, 91452 Wilhermsdorf (DE)
(86) Internationale Anmeldenummer: PCT/DE2002/003499
(87) Internationale Veröffentlichungsnummer: WO 2003/029905

(56) Entgegenhaltungen:
- WO-A-01/35178
- WO-A-01/46763
- DE-A- 19 948 272

## Beschreibung

Die Erfindung betrifft ein Verfahren zum Zugriff auf Informationen und/oder Dienste eines verteilten Automatisierungssystems mit einer Mehrzahl von Automatisierungsgeräten durch ein Programmiergerät, wobei das Programmiergerät von einem zu wartenden Automatisierungsgerät Statusinformationen erhält.

Der Zugriff erfolgt dabei innerhalb eines Netzwerkes von Automatisierungsgeräten, wobei jedes Automatisierungsgerät Kommunikationsteilnehmer innerhalb des Netzwerkes ist und wobei zwischen jeweils zwei Automatisierungsgeräten zumindest zeitweise eine sogenannte Peer-to-Peer Verbindung besteht. Bei einem Netzwerk, das Peer-to-Peer Kommunikation ermöglicht, wird allen Kommunikationsteilnehmern eine Möglichkeit zum gleichberechtigten Zugriff auf das Netzwerk gegeben. Dabei kann jeder Kommunikationsteilnehmer anderen Kommunikationsteilnehmern Informationen und Dienstleistungen anbieten und seinerseits von anderen Kommunikationsteilnehmern angebotene Informationen und Dienstleistungen nutzen. Daneben wird noch die Möglichkeit geboten, Informationen und Dienstleistungen auf anderen Kommunikationsteilnehmern zu suchen und zu lokalisieren und anschließend auf diese Funktionen oder Dienstleistungen zuzugreifen.

Im sogenannten Internet sind sogenannte Portale bekannt. Ein Portal bietet einen speziellen Zugriff auf Informationen und Dienstleistungen indem die Kommunikationsteilnehmer und zu dem Kommunikationsteilnehmer der Speicherort, an dem die Information oder Dienstleistung hinterlegt ist, abfragbar ist und durch eine einfache Aktion eine Peer-to-Peer Verbindung mit diesem Kommunikationsteilnehmer aufbaubar ist. Über eine solche Peer-to-Peer Verbindung kann die Information abgeholt oder die Dienstleistung in Anspruch genommen werden.

Aus der älteren, nachveröffentlichten europäischen Patentanmeldung mit der Anmeldenummer 001123168.5 ist ein Verfahren zum dynamischen Zugriff auf Automatisierungsressourcen bekannt, wobei in einem verteilten Automatisierungssystem mit einer Anzahl von Automatisierungskomponenten eine erste Automatisierungskomponente, die eine Automatisierungsressource sucht, eine Anfrage in das Automatisierungssystem richtet und auf diese Anfrage von allen erreichbaren Automatisierungskomponenten eine Antwort hinsichtlich verfügbarer geeigneter Automatisierungsressourcen erhält und sodann diejenige Automatisierungskomponente mit der geeigneten Automatisierungsressource auswählt und die Automatisierungsressource verwendet.

Bei einem aus der DE-A-19948272 bekannten Verfahren der eingangs angegebenen Art wird mittels eines Personal Computer, Laptop, Palmtop Notebook etc. über einer Funkverbindung auf Automatisierungsgeräte (Controller) eines Automatisierungssystems für die Inbetriebnahme, für Prüfzwecke, für die Konfiguration, für die Parametervorgabe, für Engineering sowie für Wartung und Instandhaltung zugegriffen und zusätzlich eine Fernabfrage/Zustandsabfrage des Controllers zu ermöglichen.

Aus der WO-A-0135178 ist es bekannt, zu Wartungs- und Servicezwecken in einer automatisierungstechnischen Anlage einen sich in der Anlage frei bewegen könnenden Anwender mit einer Datenbrille und einer mobilen Funk-/Sende-Einrichtung auszustatten. Ist z.B. die Wartung oder Reparatur einer bestimmten Teilkomponente der Anlage erforderlich, so wird mit Hilfe einer Kamera der Datenbrille und gegebenenfalls gesteuert durch Sprachkommandos ein Zugang zu relevanten Informationsdaten eines Augmented-Reality-Systems hergestellt. Hierzu wird über Funk eine Datenverbindung zu der Anlage aufgebaut und die Daten an das Augmented-Reality-System übermittelt, wo eine situationsgerechte Auswertung der vom Anwender erhaltenen Daten und ein automatischer oder interaktiv vom Anwender gesteuerter Zugriff auf Informationsdaten erfolgt. Die ermittelten relevanten Dokumentationsdaten werden an den Anwender übermittelt.

Der Erfindung liegt die Aufgabe zugrunde, ein Verfahren anzugeben, mit dem Informationen oder Dienstleistungen in einem verteilten Automatisierungssystem einfach und effizient gesucht werden können.

Diese Aufgabe wird erfindungsgemäß dadurch gelöst, dass bei dem Verfahren der eingangs angegebenen Art die Statusinformationen ein Selektionskriterium bilden, anhand dessen das Programmiergerät Informationen und/oder Dienstleistungen zur Wartung des zu wartenden Automatisierungsgerätes zunächst im Programmiergerät selbst und danach in den anderen Automatisierungsgeräten des Automatisierungssystems sucht und die gefundenen Informationen von dem Programmiergerät an das zu wartende Automatisierungsgerät übermittelt oder die gefundenen Dienstleistungen von dem Programmiergerät ausgeführt oder zur Ausführung an das zu wartende Automatisierungsgerät übermittelt werden.

Vorteilhafte Ausgestaltungen der Erfindung sind Gegenstand der Unteransprüche.

Die Erfindung geht dabei von der Erkenntnis aus, dass Informationen oder Dienstleistungen, die ein Automatisierungsgerät des Automatisierungssystems benötigt, häufig bereits im Automatisierungssystem vorhanden sind, z.B. bei gleichen oder gleichartigen anderen Automatisierungsgeräten.

Der Vorteil der Erfindung besteht darin, dass für einen Servicetechniker, der etwa zur Wartung eines Automatisierungsgerätes zu dem Automatisierungssystem gerufen wird, nicht mehr die Notwendigkeit besteht, sämtlich ggf. erforderlichen Daten und Softwareapplikationen mit sich führen zu müssen. Stattdessen kann er die jeweils individuell erforderliche Information oder Dienstleistung suchen und nach erfolgreicher Suche darauf zugreifen.

Wenn das Automatisierungssystem als Automatisierungsgerät ein Programmiergerät umfasst und die Suche gestuft zunächst im Programmiergerät und danach im Automatisierungssystem, d.h. bei allen anderen im Automatisierungssystem zusammengeschlossenen Automatisierungsgeräten, erfolgt, wird eine besonders günstige Suchstrategie verfolgt. Dabei wird davon ausgegangen, dass auf einem Programmiergerät, das üblicherweise ein Speichermedium wie eine Festplatte umfasst, eine Vielzahl von Daten und Softwareapplikationen gespeichert sind. Damit ist die Wahrscheinlichkeit, dass die gewünschten Informationen oder Dienstleistungen auf dem Programmiergerät vorgehalten werden, besonders groß. Außerdem wird die Geschwindigkeit der Suche erhöht, wenn die Suche auf dem Gerät begonnen wird, bei dem die höchste Wahrscheinlichkeit besteht, dass die Informationen verfügbar sind.

Wenn die Suche auf dem Programmiergerät und im Automatisierungssystem nicht erfolgreich war, wird sie in einem weiteren Schritt auf ein unternehmensweites Netzwerk ausgedehnt. Das unternehmensweite Netzwerk wird dabei - aus Sicht des Programmiergerätes - quasi zum Bestandteil des Automatisierungssystems. Der Vorteil besteht darin, dass z.B. auf das unternehmensweite Netzwerk des Unternehmens, dem der Servicetechniker angehört, zugegriffen werden kann, und somit auch ein Zugriff auf Daten und Applikationen besteht, die der Servicetechniker nicht im direkten Zugriff hat, entweder weil sie vergessen wurden oder weil zu Beginn des Einsatzes des Servicetechnikers nicht absehbar war, dass sie im Verlaufe des Einsatzes benötigt werden würden, oder weil der Servicetechniker wegen begrenzter Speicherressourcen keine Möglichkeit hat, bestimmte Daten oder Applikationen auf dem Programmiergerät mitzuführen.

Wenn die Suche weder auf dem Programmiergerät, noch im Automatisierungssystem noch im unternehmensweiten Netz erfolgreich war, wird die Suche in einem letzten Schritt auf das Internet ausgedehnt. Das Internet wird dabei - aus Sicht des Programmiergerätes - quasi zum Bestandteil des Automatisierungssystems. Das Internet hält bereits heute eine solche Fülle von Informationen und Dienstleistungen zum Abruf bereit, dass der Schluss gerechtfertigt erscheint, dass nahezu jede nachfragbare Information oder Dienstleistung im Internet verfügbar ist. Da die Information oder Dienstleistungen, die zum Betrieb eines Automatisierungssystems relevant werden können, das Spektrum der Information oder Dienstleistungen beschränkt, kann davon ausgegangen werden, dass die Suche spätestens im Internet erfolgreich ist, weil über das Internet z.B. auch auf Informationen oder Dienstleistungen von Wettbewerbsunternehmen zugegriffen werden kann.

Vorteilhaft wird bei der Suche das Selektionskriterium, mit dem die zu suchenden Informationen oder Dienstleistungen spezifiziert sind, um ein gewünschtes Kostenmodell gemäß dem die Informationen oder Dienstleistungen abrufbar oder nutzbar sind, erweitert. Wenn ein erster Dienste- oder Informationsanbieter - insbesondere im Internet - eine Abrechnung pro Nutzung oder pro Zeiteinheit vorsieht oder eine Nutzung nur mit vorheriger Anmeldung möglich ist, kann mittels eines geeignet in dieser Hinsicht erweiterten Selektionskriteriums unmittelbar die gewünschte Information oder Dienstleistung selektiert werden.

Vorteilhaft kann das Selektionskriterium alternativ oder zusätzlich auch um Referenzen des Informations- oder Dienstleistungsanbieter erweitert werden. Damit ist es möglich, Dienste- und Informationen bevorzugt bei solchen Anbietern zu suchen, deren Dienste bereits häufiger genutzt wurden oder deren Dienst zuletzt genutzt wurden. Ferner ist denkbar auf diesem Wege Dienste und Informationen bevorzugt z.B. bei neuen Anbietern oder bei bereits seit längerer Zeit aktiven Anbietern zu suchen.

Vorteilhaft kann das Selektionskriterium alternativ oder zusätzlich auch um Minimalanforderungen hinsichtlich der Qualität der Kommunikationsverbindung erweitert werden. Damit wird erreicht, dass eine gefundene Information oder Dienstleistung besonders schnell nutzbar ist, etwa weil die Qualität der Verbindung bestimmten Vorgaben genügt und damit eine Wiederholung von Transfervorgängen zur Fehlerbeseitigung besonders selten notwendig ist oder weil die Bandbreite der Verbindung bestimmten Vorgaben genügt und damit der Transfervorgang besonders schnell abgewickelt werden kann.

Der Zugriff auf die Informationen und/oder Dienstleistungen erfolgt vorteilhaft mittels eines selbstkonfigurierenden Portals. Die nachgefragte Information oder Dienstleistung wird vom Portal bei dem Kommunikationsteilnehmer angefordert, auf dem sie vorgehalten wird. Anschließend wird die Information oder Dienstleistung vom Portal an den ursprünglich nachfragenden Kommunikationsteilnehmer übermittelt oder die Dienstleistung direkt auf dem Portal ausgeführt. Das Portal ist selbst ein Kommunikationsteilnehmer im Netzwerk. Das Portal kann als Softwareapplikation auf dem Programmiergerät ablaufen.

Servicetechniker werden oft zu unterschiedlichen Automatisierungssystemen gerufen. Bei der Analyse von Störungen werden oft an den verschiedenen Automatisierungssystemen ähnliche Suchvorgänge benötigt, die aber aufgrund der unterschiedlichen Topologien der Automatisierungssysteme nicht in Form von Webkatalogen, Indices von Suchmaschinen oder sonstigen Zugriffsstrukturen mit festen Adressinformationen vordefiniert werden können. Um solche Zugriffe zu automatisieren sind in dem Portal generische, d.h. benutzer- bzw. anlagenunabhängige Suchanfragen auf der Basis von Peer-to-Peer Suchmechanismen gespeichert, die bei Bedarf durch den Servicetechniker gestartet werden und damit dynamisch jederzeit aktuelle Ergebnislisten erzeugen. Ein Beispiel für einen Zugriff mittels einer vordefinierten Suchanfrage ist die Generierung einer Liste der für die einzelnen Komponenten des jeweiligen Automatisierungssystems benötigten bzw. der im Automatisierungssystems verfügbaren Engineeringtools. Derartige Listen sind z.B. in eine Baumstruktur eines Katalogs integrierbar. Der Benutzer kann bei Bedarf zusätzliche Suchanfragen der oben beschriebenen Art definieren und speichern und mit den jeweils gelieferten Ergebnissen den Katalog ergänzen und modifizieren.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigt die einzige Figur in einem Netzwerk kommunikativ miteinander verbundene Kommunikationsteilnehmer.

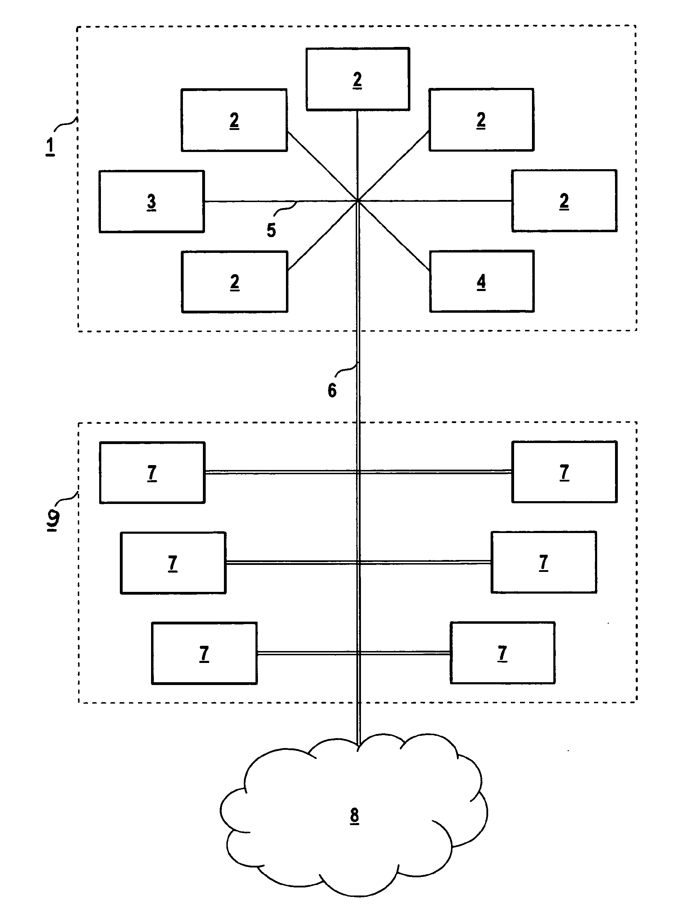

FIG 1 zeigt ein Automatisierungssystem 1 mit einer Mehrzahl von Automatisierungsgeräten 2, 3, 4 die über einen Automatisierungssystembus 5, z.B. einen Feldbus 5, miteinander kommunikativ verbunden sind. Eines der Automatisierungsgeräte 3 ist ein Programmiergerät 3, das zur Wartung eines zu wartenden Automatisierungsgerätes 4 temporär an den Automatisierungssystembus 5 angeschlossen ist.

Zwischen dem Automatisierungssystem 1 und einem Unternehmensweiten Netzwerk 9 besteht eine kommunikative Verbindung 6. Über diese Verbindung 6 ist für Automatisierungsgeräte 2, 3, 4 auch ein Zugriff auf Informationen und/oder Dienstleistungen, die durch einen der Kommunikationsteilnehmer 7 des unternehmensweiten Netzwerkes 9 vorgehalten werden, möglich. Das unternehmensweite Netzwerk 9 ist dabei z.B. das Netzwerk 9 des Unternehmens, das mit der Wartung des Automatisierungssystems 1 betraut ist. Das unternehmensweite Netzwerk 9 kann z.B. auch das Netzwerk 9 des Unternehmens sein, das die Automatisierungsgeräte 2, 3, 4, insbesondere das zu wartende Automatisierungsgerät 4, herstellt oder vertreibt.

Über die Verbindung 6 ist schließlich auch eine Verbindung mit dem Internet 8 gegeben. Im Internet 8 besteht eine Zugriffsmöglichkeit auf weitere Informations- und Dienstleistungsressourcen.

Im Falle der Wartung des zu wartenden Automatisierungsgerätes 4 wird ein spezielles Automatisierungsgerät 3, mit dem Wartungsarbeiten durchführbar sind, z.B. ein Programmiergerät 3, an den Automatisierungssystembus 5 angeschlossen. Über den Bus 5 kann eine Verbindung, insbesondere eine Peer-to-Peer Verbindung, zwischen dem Programmiergerät 3 und dem zu wartenden Automatisierungsgerät 4 hergestellt werden. Über diese Verbindung werden bei dem zu wartenden Automatisierungsgerät 4 Statusinformationen abgeholt. Diese Statusinformationen können z.B. eine Fehlermeldung oder eine Anforderung hinsichtlich einer bestimmten Information, z.B. hinsichtlich einer fremdsprachigen Fassung eines Bedienhandbuches, sein. Die Fehlermeldung ist dabei entweder direkt auswertbar oder implizit z.B. in der Gesamtheit der Zustände des Automatisierungsgerätes enthalten, wenn anhand der Zustände automatisch auf eine konkrete Fehlersituation geschlossen werden kann. Die Statusinformationen bilden ein Selektionskriterium, anhand dessen automatisch Informationen und/oder Dienstleistungen zur Wartung des zu wartenden Automatisierungsgerätes 4 zunächst auf dem Programmiergerät 3 gesucht werden.

Wenn die gesuchte Information oder Dienstleistung auf dem Programmiergerät 3 vorgehalten wird, wird die nachgefragte Information an das Automatisierungsgerät 4 übermittelt bzw. die nachgefragte Dienstleistung entweder auf dem Programmiergerät oder nach dessen Übermittlung an das Automatisierungsgerät 3 auf diesem ausgeführt.

Wenn die gesuchte Information oder Dienstleistung auf dem Programmiergerät 3 nicht verfügbar ist, wird bei Bestehen einer Verbindung 6 zu einem unternehmensweiten Netzwerk 9 die Suche auf das Netzwerk 9 ausgedehnt. Werden die Informationen oder Dienstleistungen auf einem der Kommunikationsteilnehmer 7 des unternehmensweiten Netzwerkes 9 gefunden, werden sie - wie wenn sie auf dem Programmiergerät 3 gefunden worden wären - übermittelt oder ausgeführt.

Wenn die gesuchten Informationen oder Dienstleistungen auch in dem unternehmensweiten Netzwerk 9 nicht verfügbar sind, wird bei Bestehen einer Verbindung 6 zum Internet 8 die Suche schließlich im Internet 8 fortgesetzt.

## Patentansprüche

1. Verfahren zum Zugriff auf Informationen und/oder Dienste eines Automatisierungssystems (1) mit einer Mehrzahl von Automatisierungsgeräten (2, 4) durch ein Programmiergerät (3), wobei das Programmiergerät (3) von einem zu wartenden Automatisierungsgerät (4) Statusinformationen erhält, **dadurch gekennzeichnet, dass** die Statusinformationen ein Selektionskriterium bilden, anhand dessen das Programmiergerät (3) Informationen und/oder Dienstleistungen zur Wartung des zu wartenden Automatisierungsgerätes (4) zunächst im Programmiergerät (3) selbst und danach in den anderen Automatisierungsgeräten (2) des Automatisierungssystems (1) sucht und die gefundenen Informationen von dem Programmiergerät (3) an das zu wartende Automatisierungsgerät (4) übermittelt oder die gefundenen Dienstleistungen von dem Programmiergerät (3) ausgeführt oder zur Ausführung an das zu wartende Automatisierungsgerät (4) übermittelt werden.

2. Verfahren nach Anspruch 1, wobei die Suche in einem weiteren Schritt auf ein unternehmensweites Netzwerk (9) ausgedehnt wird.

3. Verfahren nach Anspruch 2, wobei die Suche in einem letzten Schritt auf das Internet (8) ausgedehnt wird.

4. Verfahren nach einem der Ansprüche 1 bis 3, wobei das Selektionskriterium um ein gewünschtes Kostenmodell gemäß dem die Informationen oder Dienstleistungen abrufbar oder nutzbar sind, erweitert wird.

5. Verfahren nach einem der Ansprüche 1 bis 4, wobei das Selektionskriterium um Referenzen des Informations- oder Dienstleistungsanbieter erweitert wird.

6. Verfahren nach einem der Ansprüche 1 bis 5, wobei das Selektionskriterium um Minimalanforderungen hinsichtlich der Qualität der Kommunikationsverbindung erweitert wird.

7. Verfahren nach einem der obigen Ansprüche, wobei der Zugriff auf die Informationen und/oder Dienstleistungen mittels eines selbstkonfigurierenden Portals, erfolgt.

## Claims

1. Method for accessing information and/or services of an automation system (1) comprising a plurality of automation devices (2, 3, 4), by means of a programming device (3), with the programming device (3) obtaining status information from an automation device (4) to be serviced, **characterised in that** the status information forms a selection criterion, on the basis of which the programming device (3) searches for information and/or services for servicing the automation device (4) to be serviced firstly in the programming device (3) itself and subsequently in the other automation devices (2) of the automation system (1) and transmits the information found from the programming device (3) to the automation device (4) to be serviced or the found services are implemented by the programming device (3) or are transmitted to the automation device (4) to be serviced for implementation purposes.

2. Method according to claim 1, wherein in a further step the search is extended to a company-wide network (9).

3. Method according to claim 2, wherein in a final step the search is extended to the Internet (8).

4. Method according to any one of claims 1 to 3, wherein the selection criterion is broadened to include a desired cost model in accordance with which the information or services can be retrieved or used.

5. Method according to any one of claims 1 to 4, wherein the selection criterion is broadened to include information provider or service provider references.

6. Method according to any one of claims 1 to 5, wherein the selection criterion is broadened to include minimum requirements with regard to the quality of the communication link.

7. Method according to any one of the preceding claims, wherein access to the information and/or services is by means of a portal, in particular by means of a self-configuring portal.

## Revendications

1. Procédé d'accès à des informations et/ou à des services d'un système ( 1 ) d'automatisation ayant une multiplicité d'appareils ( 2, 4 ) d'automatisation par un appareil ( 3 ) de programmation l'appareil ( 3 ) de programmation, recevant des informations de statut d'un appareil ( 4 ) d'automatisation à entretenir, **caractérisé en ce que** les informations de statut forment un critère de sélection au moyen duquel l'appareil ( 3 ) de programmation recherche des informations et/ou des prestations de services pour l'entretien de l'appareil ( 4 ) d'automatisation à entretenir d'abord dans l'appareil ( 3 ) de programmation soi-même et ensuite dans les autres appareils ( 2 ) d'automatisation du système ( 1 ) d'automatisation et transmet les informations trouvées de l'appareil ( 3 ) de programmation à l'appareil ( 4 ) d'automatisation à entretenir où les prestations de service trouvées sont exécutées par l'appareil ( 3 ) de programmation ou sont transmises pour exécution à l'appareil ( 4 ) d'automatisation à entretenir.

2. Procédé selon la revendication 1, dans lequel la recherche s'étend dans un autre stade à un réseau ( 9 ) d'entreprise.

3. Procédé selon la revendication 2, dans lequel la recherche s'étend dans un dernier stade à l'Internet 8.

4. Procédé suivant l'une des revendications 1 à 3, dans lequel le critère de sélection est élargi d'un modèle de coût suivant lequel les informations ou les prestations de service peuvent être appelées ou être utilisées.

5. Procédé suivant l'une des revendications 1 à 4, dans lequel le critère de sélection est complété par des références du fournisseur d'information ou du prestataire de service.

6. Procédé suivant l'une des revendications 1 à 5, dans lequel le critère de sélection est complété par exigences minimum du point de vue de la qualité de liaison de communication.

7. Procédé suivant l'une des revendications ci-dessus dans lequel l'accès aux informations ou aux prestations de service s'effectue au moyen d'un portail à autoconfiguration.
